# EUROPÄISCHE PATENTSCHRIFT

(11) **EP 3 932 165 B1**
(45) Veröffentlichungstag und Bekanntmachung des Hinweises auf die Patenterteilung: **26.10.2022**
(21) Anmeldenummer: 21172231.9
(22) Anmeldetag: 05.05.2021
(51) Int. Cl.: A01B 73/04

(54) **BODENBEARBEITUNGSGERÄT UND ZUGFAHRZEUG HIERFÜR**
TILLAGE IMPLEMENT AND TRACTOR THEREFOR
OUTIL DE TRAVAIL DU SOL ET TRACTEUR CORRESPONDANT

(30) Priorität: 29.06.2020 DE 102020117044
(43) Veröffentlichungstag der Anmeldung: 05.01.2022
(73) Patentinhaber: Miller, Christoph, 87769 Oberrieden (DE)
(72) Erfinder: Miller, Christoph, 87769 Oberrieden (DE)
(74) Vertreter: Dr. Binder & Binder GbR

(56) Entgegenhaltungen:
- EP-B1- 1 500 322
- DE-A1-102004 020 609
- US-A- 4 232 747
- US-A- 4 479 554

## Beschreibung

Die Erfindung betrifft ein Bodenbearbeitungsgerät zum Anhängen oder Anbauen an ein Zugfahrzeug, aufweisend: eine Kupplungsvorrichtung, einen mehrteiligen Tragrahmen für eine Vielzahl von Bodenbearbeitungswerkzeugen, wobei der Tragrahmen ein Mittelteil und mindestens zwei seitlich angeordnete, gegenüberliegende Seitenteile aufweist, und eine Schwenkvorrichtung zum Schwenken der mindestens zwei Seitenteile jeweils um eine sich in Fahrtrichtung erstreckende Schwenkachse zwischen einer breiten Arbeitsstellung und eine aufrechten Transportstellung, wobei eine Verschiebevorrichtung vorliegt, mittels der die mindestens zwei Seitenteile in einer Linearbewegung quer zur Fahrtrichtung bewegt werden.

Weiterhin betrifft die Erfindung ein Zugfahrzeug mit einem Anbaugerät.

Bodenbearbeitungsgeräte für den landwirtschaftlichen Einsatz sind allgemein bekannt. Im Zuge der aktuellen Entwicklung der Landwirtschaft besteht der Bedarf, immer größere Flächen zu bearbeiten, sodass auch die eingesetzten Bodenbearbeitungsgeräte eine immer größere Arbeitsbreite von über 6 m aufweisen. Zum Transport der Bodenbearbeitungsgeräte über öffentliche Straßen sind jedoch eine Maximalbreite von 3 m und eine Maximalhöhe von 4 m vorgeschrieben.

Aus der Druckschrift EP 2 347 644 A1 ist ein mehrteiliges Bodenbearbeitungsgerät für die Landwirtschaft bekannt, bei dem der Tragrahmen aus einem Mittelteil und zwei Seitenteilen besteht, wobei die Seitenteile zum Transport auf öffentlichen Straßen nach oben geklappt werden können. Zusätzlich können die Seitenteile noch aus mehreren Segmenten ausgebildet werden, die zur Verringerung der Höhe weiterhin zusammengeklappt werden können.

Ein ähnliches klappbares Bodenbearbeitungsgerät ist aus der Druckschrift EP 2 589 283 B1 bekannt.

Die Druckschrift EP 1 500 322 B1 beschreibt ein weiteres Bodenbearbeitungsgerät mit einem mehrteiligen Tragrahmen, bei dem die Seitenteile mittels einer kombinierten Schwenk- und Verschiebebewegung in Lagen oberhalb und zumindest teilweise innerhalb des mittleren Tragrahmenteiles verstellbar sind, sodass eine Transportbreite des Bodenbearbeitungsgerätes weiter verringert werden kann. Die Seitenteile werden also gleichzeitig in die aufrechte Transportstellung geschwenkt und quer zur Fahrtrichtung nach innen verschoben. Obwohl diese Druckschrift hier lediglich von einer translatorischen Bewegung spricht, findet eine kombinierte Schwenk- und Verschiebebewegung, also keine rein translatorische beziehungsweise lineare Bewegung statt.

Schließlich ist aus der Druckschrift US 4,878,545 A noch ein Bodenbearbeitungsgerät bekannt, bei dem die Seitenteile derart beweglich mit dem Mittelteil verbunden sind, dass sie in der Transportstellung relativ zu dem Mittelteil angehoben und abgesenkt werden können.

Die Druckschriften US 4 232 747 A und DE 10 2004 020 609 A1 offenbaren jeweils ein Bodenbearbeitungsgerät mit den Merkmalen des Oberbegriffs des Anspruchs 1.

Als weiterer Stand der Technik wird noch auf die Druckschrift EP 2 526 753 A1 und die Druckschrift US 4 479 554 A verwiesen.

Es ist Aufgabe der Erfindung, ein alternatives Bodenbearbeitungsgerät mit einer alternativen Vorrichtung zum Verringern der Transportbreite und/oder -höhe sowie ein Zugfahrzeug hierfür bereitzustellen.

Diese Aufgabe wird durch die Merkmale der unabhängigen Patentansprüche gelöst. Vorteilhafte Weiterbildungen der Erfindung sind Gegenstand untergeordneter Ansprüche.

Die Erfinder haben erkannt, dass die Schwenkbewegung und die Linearbewegung der Seitenteile getrennt voneinander beziehungsweise nacheinander ausgeführt werden kann, sodass die Seitenteile zunächst aus der breiten Arbeitsstellung in einer aufrechte Transportstellung geschwenkt und anschließend linear quer zur Fahrtrichtung verschoben werden können, um die Breite und/oder die Höhe des Gerätes in der Transportstellung zu verringern. Hierzu liegen eine Schwenkvorrichtung und eine separate Verschiebevorrichtung vor. Die Schwenkachse kann bei der erfindungsgemäßen Schwenkbeziehungsweise Verschiebevorrichtung ortsfest sein. Ein weiterer Vorteil dadurch ist, dass die Bodenanpassung des Gerätes in der Arbeitsstellung einfacher und genauer möglich.

Demgemäß schlagen die Erfinder vor, ein Bodenbearbeitungsgerät zum Anhängen oder Anbauen an ein Zugfahrzeug, aufweisend: eine Kupplungsvorrichtung, einen mehrteiligen Tragrahmen für eine Vielzahl von Bodenbearbeitungswerkzeugen, wobei der Tragrahmen ein Mittelteil und mindestens zwei seitlich angeordnete, gegenüberliegende Seitenteile aufweist, und eine Schwenkvorrichtung zum Schwenken der mindestens zwei Seitenteile jeweils um eine sich in Fahrtrichtung erstreckende Schwenkachse zwischen einer breiten Arbeitsstellung und einer aufrechten Transportstellung, wobei eine Verschiebevorrichtung vorliegt, mittels der die mindestens zwei Seitenteile in einer Linearbewegung quer zur Fahrtrichtung bewegt werden, dahingehend zu verbessern, dass je Seitenteil drei sich koaxial zur Schwenkachse erstreckende Befestigungsachsen zum Befestigen des Seitenteils an dem Mittelteil vorgesehen sind, je Seitenteil die drei Befestigungsachsen jeweils auf einem Gleitschlitten angeordnet sind, welche jeweils auf einer Gleitschiene quer zur Fahrtrichtung verschiebbar sind, an mindestens einem Gleitschlitten ein Hydraulikzylinder zum Schwenken des Seitenteils vorgesehen ist, wobei der Hydraulikzylinder einerseits an dem Gleitschlitten und andererseits an dem Seitenteil angelenkt ist, an dem mindestens einen Gleitschlitten eine Drehmomentstütze vorgesehen ist, welche das auf den Gleitschlitten wirkende Drehmoment beim Schwenken des Seitenteiles zusätzlich in das Mittelteil einleitet, wobei ein Hydraulikzylinder mit einer Drehmomentstütze auf einem mittleren Gleitschlitten vorgesehen ist.

Das Bodenbearbeitungsgerät wird gebildet durch den mehrteiligen Tragrahmen, an welchem eine Vielzahl von Bodenbearbeitungswerkzeugen ausgebildet ist. Beispielsweise ist das Bodenbearbeitungswerkzeug ein Grubber mit einer Vielzahl von Zinken. Der Tragrahmen umfasst ein Mittelteil, an welchem vorteilhafterweise die Kupplungsvorrichtung zum Verbinden mit dem Zugfahrzeug angebracht ist. Weiterhin umfasst der Tragrahmen mindestens zwei Seitenteile, welche seitlich und gegenüberliegend an dem Mittelteil angebracht sind.

Das Mittelteil und die Seitenteile sind bewegbar, insbesondere schwenkbar und verschiebbar, miteinander verbunden. In der Arbeitsstellung sind die Seitenteile und das Mittelteil in einer flachen, breiten Arbeitsebene nebeneinander quer zur Fahrtrichtung positioniert, sodass die Werkzeuge nach unten zum zu bearbeitenden Boden ausgerichtet sind. Die Seitenteile können mittels der Schwenkvorrichtung aus der breiten Arbeitsstellung in eine aufrechte Transportstellung geschwenkt werden. In der Transportstellung haben die Seitenteile zusammen mit dem Mittelteil eine U-Form.

Diese U-Form kann erfindungsgemäß verschmälert oder niedriger werden, indem mittels der Verschiebevorrichtung die Seitenteile in einer Linearbewegung quer zur Fahrtrichtung verschoben werden. Bei der Linearbewegung handelt es sich um eine rein translatorische Bewegung ohne Rotationsanteil, also geradlinig ohne Drehung. Die Schwenkbewegung und die Drehbewegung der Seitenteile werden getrennt voneinander ausgeführt, nämlich bevorzugt zuerst die Schwenkbewegung und anschließend die Linearbewegung, wobei es grundsätzlich auch im Rahmen der Erfindung liegt, die Reihenfolge der Bewegungen umzudrehen. Leichte Abweichungen von der Linearbewegung durch ein Materialfehler oder -toleranzen etc. gelten trotzdem als Linearbewegung ohne Rotationsanteil.

Besonders vorteilhaft, ist die Schwenkachse der Seitenteile jeweils ortsfest beziehungsweise stationär. Weiterhin vorteilhaft ist die Schwenkachse jeweils randseitig an dem Mittelteil und den Seitenteilen angeordnet. Mit anderen Worten erstreckt sich die Schwenkachse jeweils in einer durch das Mittelteil aufgespannten Ebene entlang der in Fahrtrichtung ausgerichteten Randseiten dieser Ebene beziehungsweise des Mittelteils. Aufgrund dieser Anordnung der Schwenkachsen ist es möglich, die Bewegungen der Seitenteile zum Schwenken und Verschieben getrennt voneinander auszuführen.

Ein weiterer Vorteil der außen am Mittelteil liegenden Schwenkachsen ist, dass die Bodenanpassung des Gerätes, also insbesondere dessen Höheneinstellung relativ zum Boden, in der Arbeitsstellung genauer ist.

Die Linearbewegung der Seitenteile erfolgt erfindungsgemäß quer zur Fahrtrichtung, also beispielsweise horizontal, vertikal oder schräg mit einem leichten Winkel nach oben oder unten. Eine schräge Linearbewegung ermöglicht beispielsweise ein zusätzliches Absenken oder Anheben der Seitenteile oder Verschmälern der Transportstellung.

In einer ersten Variante der Erfindung ist die Verschiebevorrichtung derart ausgebildet, dass die Linearbewegung in horizontaler Richtung erfolgt. Die gegenüberliegenden Seitenteile werden dabei aufeinander zu bewegt. Hierdurch wird vorteilhafterweise erreicht, dass die aufrechte Transportstellung der Seitenteile schmäler wird. Vorteilhafterweise wird die Höhe der Seitenteile dabei nicht verändert. Es erfolgt eine rein horizontale Linearbewegung ohne vertikale Bewegungskomponente vor. Dies ermöglicht die Einhaltung der Maximalhöhe zum Befahren von öffentlichen Straßen.

Erfindungsgemäß ist je Seitenteil ist mindestens eine sich koaxial zur Schwenkachse erstreckende Befestigungsachse zum Befestigen des Seitenteils an dem Mittelteil vorgesehen. Beispielsweise können eine, zwei, drei oder mehr Befestigungsachsen ausgebildet sein. Grundsätzlich ist eine einzige Befestigungsachse je Seitenteil ausreichend, um dieses mit dem Mittelteil schwenkbar zu verbinden, wobei diese Befestigung beispielsweise gegenüber Torsion äußerst instabil ist. Besonders günstig ist daher eine Befestigung mit zwei oder mehreren Befestigungsachsen je Seitenteil.

Dabei ist je Seitenteil die mindestens eine Befestigungsachse auf einem Gleitschlitten angeordnet, welcher auf einer Gleitschiene quer zur Fahrtrichtung verschiebbar ist. Vorteilhaft ist jede Befestigungsachse jedes Seitenteils auf einem Gleitschlitten in Kombination mit einer Gleitschiene angeordnet. Durch die Anordnung der Befestigungsachse(n) auf einem Gleitschlitten wird deren Verschieben quer zur Fahrtrichtung ermöglicht. Die Gleitschiene ist entsprechend vorteilhaft quer zur Fahrtrichtung ausgerichtet. Weiterhin vorteilhaft sind die Gleitschiene und der Gleitschlitten zumindest teilweise komplementär ausgebildet, um ein möglichst reibungsfreies Gleiten und Verschieben zu gewährleisten. In einer beispielhaften Ausführungsform umgreift der Gleitschlitten die Gleitschiene zumindest teilweise und gleitet sozusagen an deren Seiten entlang. In einer anderen beispielhaften Ausführungsform ist die Gleitschiene zweigeteilt und umgibt den Gleitschlitten zumindest teilweise, welcher mittig zwischen den beiden Hälften der Gleitschiene entlang gleiten kann.

In einer einfachen Ausführungsform ist die Gleitschiene als Vierkantrohr ausgebildet. Weiterhin sind die Gleitschiene und/oder der Gleitschlitten in einer einfachen Ausführungsform aus einem Metall oder Kunststoff ausgebildet. Andere Ausführungsformen sind möglich und liegen im Rahmen der Erfindung.

Weiterhin erfindungsgemäß ist an mindestens einem Gleitschlitten ein Hydraulikzylinder zum Schwenken des Seitenteils vorgesehen, wobei der Hydraulikzylinder einerseits an dem Gleitschlitten und andererseits an dem Seitenteil angelenkt ist.

Zudem ist an mindestens einem Gleitschlitten eine Drehmomentstütze vorgesehen, welche das auf den Gleitschlitten wirkende Drehmoment beim Schwenken des Seitenteiles zusätzlich in das Mittelteil einleitet.

Der Hydraulikzylinder und die Drehmomentstütze sind bevorzugt an einem gemeinsamen Gleitschlitten angeordnet. Erfindungsgemäß sind drei Befestigungsachsen beziehungsweise drei Gleitschlitten ausgeführt. Diese erfindungsgemäße Ausführungsform sieht einen Hydraulikzylinder mit einer Drehmomentstütze auf dem mittleren Gleitschlitten vor. Bevorzugt sind gegenüberliegende Seitenteile gleich, insbesondere spiegelbildlich, ausgebildet.

Die Drehmomentstützen sind bevorzugt länglich ausgebildet und einerseits an dem Gleitschlitten angelenkt und ortsfest montiert und andererseits am Mittelteil abgestützt. Die Längserstreckung der Drehmomentstützen erstreckt sich im Wesentlichen längs der Gleitschienen. Um deren Verschieben quer zur Fahrtrichtung, also jeweils in Richtung des gegenüberliegenden Seitenteils, zu ermöglichen, sind vorteilhafterweise zwei unmittelbar gegenüberliegende Drehmomentstützen in Fahrtrichtung versetzt angeordnet.

Die Linearbewegung der Seitenteile kann beispielsweise manuell oder mittels eines Antriebes ausgeführt werden. Aufgrund des hohen Gewichts und der Größe der Seitenteile ist ein steuerbarer Antrieb zum Verschieben der Seitenteile günstig. In einer Ausführungsform sind die mindestens zwei Seitenteile über einen Linearantrieb miteinander gekoppelt, um die horizontale Linearbewegung auszuführen. In einer anderen Ausführungsform ist je Seitenteil mindestens ein Gleitschlitten über einen Linearantrieb mit dem Mittelteil verbunden, um die horizontale Linearbewegung auszuführen. Der Linearantrieb ist vorzugsweise als Spindelantrieb oder Hydraulikzylinder ausgebildet, wobei auch alternative Antriebsarten im Rahmen der Erfindung liegen.

In einer weiteren Variante der Erfindung ist das Mittelteil quer zur Fahrtrichtung teleskopierbar ausgebildet, sodass in der Transportstellung die Breite des Mittelteils quer zur Fahrtrichtung verringert werden kann.

In noch einer anderen Variante der Erfindung ist die Verschiebevorrichtung derart ausgebildet, dass die Linearbewegung in vertikaler Richtung erfolgt. Dadurch können die Seitenteile relativ zum Mittelteil in der Transportstellung abgesenkt werden.

Vorteilhafterweise ist noch eine Arretiervorrichtung vorgesehen, welche das Mittelteil und die mindestens zwei Seitenteile in der Arbeits- oder Transportstellung fixiert, um insbesondere eine unbeabsichtigte Bewegung der Seitenteile zu verhindern.

An jeder Seite des Mittelteils können jeweils zwei oder mehr Seitenteile vorgesehen sein, welche in Fahrtrichtung hintereinander an dem Mittelteil angeordnet sind. Vorteilhafterweise sind die Seitenteile in ihrer Anzahl und Ausbildung gleich, vor allem spiegelbildlich, ausgebildet. Weiterhin ist es möglich, dass die mindestens zwei Seitenteile jeweils mindestens zwei Segmente aufweisen, welche zusammenklappbar, vorzugsweise um eine horizontale Achse klappbar, ausgebildet sind. Eine derartige Ausführung ermöglicht vorteilhafterweise eine zusätzliche Verringerung der Höhe der Seitenteile in der Transportstellung und ermöglicht im Umkehrschluss eine größere Arbeitsbreite des Bodenbearbeitungsgerätes.

Auch ist es günstig, wenn die Bodenbearbeitungswerkzeuge auswechselbar ausgebildet sind.

Die Kupplungsvorrichtung ist beispielsweise als Dreipunkt-Kupplung oder in aufgesattelter Form des Gerätes als 1-, 2- oder 3-Punktanhängung ausgeführt und ermöglicht so eine variable Wahl des Zugfahrzeuges und ein einfaches An- und Abkuppeln an das Zugfahrzeug. Unter dem Begriff Dreipunkt-Kupplung wird auch ein Dreipunkt-Kraftheber oder eine Dreipunkthydraulik verstanden.

Zudem kann zumindest an dem Mittelteil noch mindestens ein höhenverstellbares Stützrad vorliegen, welches den gesamten Tragrahmen sowohl in der Transportstellung als auch in der Arbeitsstellung stabilisiert.

Weiterhin betrifft die Erfindung ein Zugfahrzeug, insbesondere ein landwirtschaftliches Zugfahrzeug, mit einem Anbaugerät, wobei das Anbaugerät als voranstehend beschriebenes, erfindungsgemäßes Bodenbearbeitungsgerät ausgeführt ist.

Insgesamt betrifft die Erfindung also ein Bodenbearbeitungsgerät zum Anhängen oder Anbauen an ein Zugfahrzeug, aufweisend: eine Kupplungsvorrichtung, die das Bodenbearbeitungsgerät mit dem Zugfahrzeug verbindet, einen mehrteiligen Tragrahmen für eine Vielzahl von Bodenbearbeitungswerkzeugen, wobei der Tragrahmen ein Mittelteil und mindestens zwei seitlich angeordnete, gegenüberliegende Seitenteile aufweist, und eine Schwenkvorrichtung zum Schwenken der mindestens zwei Seitenteile jeweils um eine sich in Fahrtrichtung erstreckende Schwenkachse zwischen einer breiten Arbeitsstellung und eine aufrechten Transportstellung, wobei eine Verschiebevorrichtung vorliegt, mittels der die mindestens zwei Seitenteile in einer Linearbewegung quer zur Fahrtrichtung bewegt werden, sowie ein Zugfahrzeug, mit einem erfindungsgemäßen Bodenbearbeitungsgerät als Anbaugerät.

Im Folgenden wird die Erfindung anhand der Figuren näher beschrieben, wobei nur die zum Verständnis der Erfindung notwendigen Merkmale dargestellt sind.

Es zeigen im Einzelnen:
- FIG 1:: eine Draufsicht auf ein erfindungsgemäßes Bodenbearbeitungsgerät in der Arbeitsstellung,
- FIG 2:: eine Perspektivansicht des erfindungsgemäßen Bodenbearbeitungsgerätes gemäß Figur 1,
- FIG 3:: eine Frontansicht des erfindungsgemäßen Bodenbearbeitungsgerätes in der Transportstellung,
- FIG 4:: eine Frontansicht des erfindungsgemäßen Bodenbearbeitungsgerätes gemäß Figur 3 mit einem verschobenen Seitenteil,
- FIG 5:: eine Frontansicht des erfindungsgemäßen Bodenbearbeitungsgerätes gemäß Figur 3 mit zwei verschobenen Seitenteilen,
- FIG 6:: einen vergrößerten Ausschnitt des erfindungsgemäßen Bodenbearbeitungsgerätes gemäß Figur 3, und
- FIG 7:: eine Detailansicht des erfindungsgemäßen Bodenbearbeitungsgerätes gemäß Figur 1.

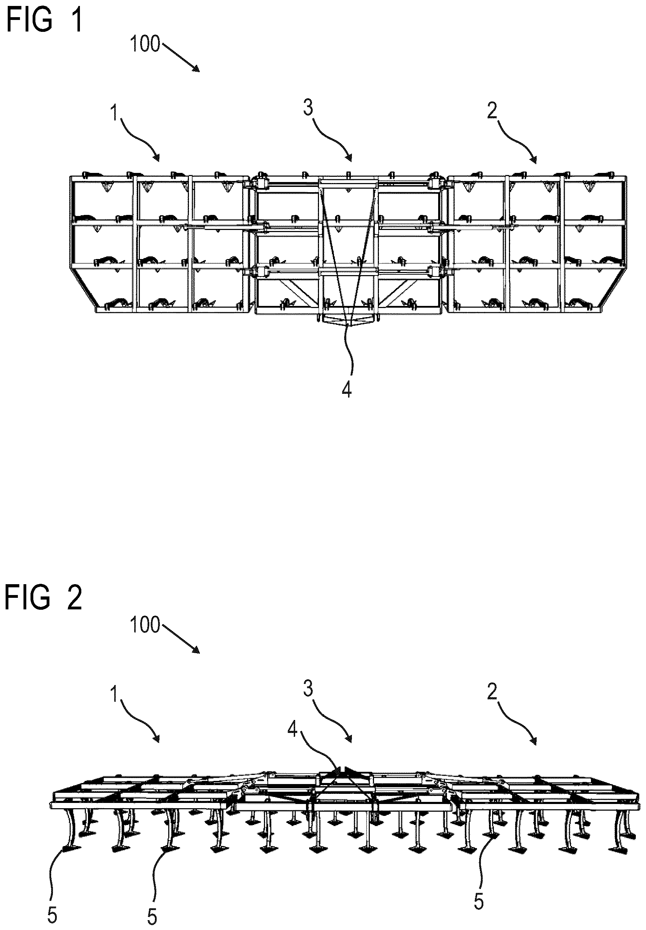

Die Figuren 1 bis 5 zeigen jeweils das erfindungsgemäße Bodenbearbeitungsgerät in verschiedenen Ansichten und Stellungen. Gleiche Bauteile werden dabei stets mit gleichen Bezugszeichen bezeichnet.

Das Bodenbearbeitungsgerät 100, kurz mit Gerät bezeichnet, ist in der hier beispielhaft ausgewählten Ausführungsform als Grubber zur Lockerung eines Bodens etc. ausgebildet. Das Gerät 100 weist einen mehrteiligen Tragrahmen auf, welcher ein Mittelteil 3 sowie zwei seitlich angeordnete Seitenteile 1 und 2 umfasst. Seitlich bedeutet hier quer zur Fahrtrichtung. An den Seitenteilen 1 und 2 sowie an dem Mittelteil 3 sind eine Vielzahl von Bodenbearbeitungswerkzeuge in Form von auswechselbaren Zinken 5 angebracht.

An dem Mittelteil 3 ist eine als Dreipunkt-Kupplung 4 ausgebildete Kupplungseinrichtung zum Anhängen des Gerätes 100 an ein Zugfahrzeug ausgebildet.

Die **Figur 1** zeigt das Gerät 100 als Draufsicht in einer breiten Arbeitsstellung, bei der sich beide Seitenteile 1, 2 und das Mittelteil 3 flach in einer Arbeitsebene parallel zu dem zu bearbeitenden Boden erstrecken. Die **Figur 2** zeigt noch eine Perspektivansicht des Gerätes 100 in der Arbeitsstellung.

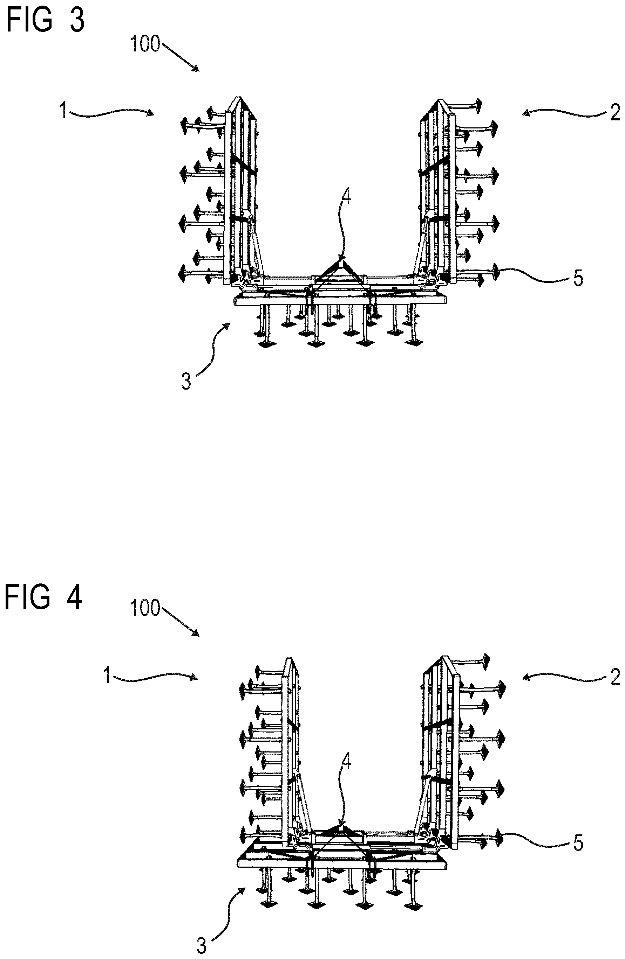

Die Seitenteile 1, 2 sind mit dem Mittelteil 3 jeweils um eine ortsfeste Schwenkachse S, die sich in Fahrtrichtung erstreckt und randseitig an dem Mittelteil 3 angeordnet ist, schwenkbar verbunden. Aus der breiten Arbeitsstellung können die Seitenteile 1, 2 mittels einer reinen Schwenkvorrichtung in eine aufrechte Transportstellung und wieder zurück geschwenkt werden. Die aufrechte Transportstellung des Gerätes 100 ist in der **Figur 3** gezeigt. In der Transportstellung bilden die Seitenteile 1, 2 mit dem Mittelteil 3 eine U-Form aus.

Erfindungsgemäß kann die Breite der U-Form in der Transportstellung durch eine Linearbewegung der Seitenteile 1, 2 verringert werden. Dies erfolgt mittels einer Verschiebevorrichtung, welche die Seitenteile 1, 2 quer zur Fahrtrichtung bewegt.

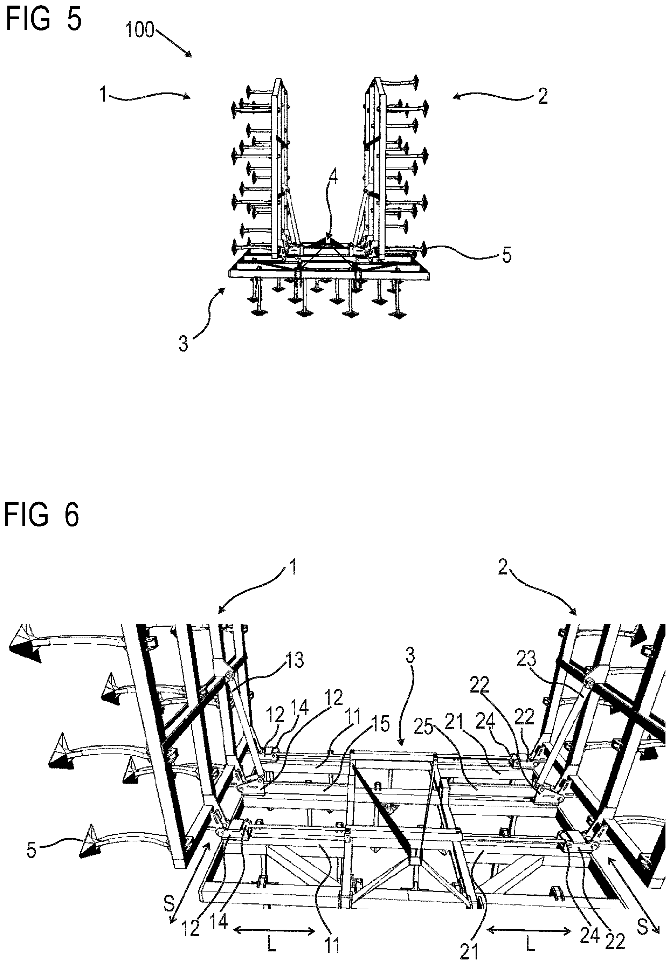

Die **Figur 4** zeigt das Gerät 100 in der Transportstellung mit einem quer zur Fahrtrichtung, hier in horizontaler Richtung, verschobenen Seitenteil 1. Die **Figur 5** zeigt das Gerät 100 mit beidseitig verschobenen Seitenteilen 1 und 2.

Die **Figur 6** zeigt einen vergrößerten Ausschnitt des Gerätes 100 in der Transportstellung gemäß Figur 3 mit geschwenkten, aufrechten Seitenteilen 1 und 2. Die Seitenteile 1, 2 sind jeweils um die sich in Fahrtrichtung erstreckende Schwenkachse S schwenkbar. Weiterhin sind in der hier beispielhaft gezeigten Ausführungsform pro Seitenteil 1, 2 jeweils drei Befestigungsachsen ausgebildet, welche sich koaxial zur Schwenkachse S erstrecken und an denen das Seitenteil 1, 2 jeweils an dem Mittelteil 3 befestigt ist. An jeder Befestigungsachse sind ein Gleitschlitten 12, 22 und eine Gleitschiene 11, 21 vorgesehen. Die Gleitschlitten 12, 22 sind jeweils auf den Gleitschienen 11, 21 in Richtung L der Linearbewegung quer zur Fahrtrichtung und horizontal verschiebbar. Die Seitenteile 1, 2 sind jeweils an den Gleitschlitten 12, 22 mittels Bolzen angelenkt.

Je Seitenteil 1, 2 ist an der mittleren Befestigungsachse ein Hydraulikzylinder 13, 23 zum Auslösen der Schwenkbewegung ausgebildet. Die länglichen Hydraulikzylinder 13, 23 sind an einem Ende über einen Bolzen an den Gleitschlitten 12, 22 und mit dem anderen Ende über einen Bolzen an dem Seitenteil 1, 2 schwenkbar verbunden.

Weiterhin ist je Seitenteil 1, 2 an der mittleren Befestigungsachse eine Drehmomentstütze 15, 25 an dem Gleitschlitten 12, 22 befestigt. Mittels der Drehmomentstützen 15, 25 soll das auf den Gleitschlitten 12, 22 wirkende Drehmoment beim Schwenken der Seitenteile 1, 2 auf den Mittelteil 3 verteilt werden. Die Drehmomentstützen 15, 25 sind länglich ausgebildet und werden an ihrem vorderen Ende nochmals auf dem Mittelteil 3 mit einer Art Bügel 16 abgestützt. Die paarweise gegenüberliegenden Drehmomentstützen 15, 25 sind jeweils leicht in Fahrtrichtung versetzt angeordnet, um ein Anstoßen bei der Linearbewegung der Seitenteile 1, 2 zu vermeiden. Zusätzlich ist je Seitenteil 1, 2 an den beiden äußeren Befestigungsachsen ein Hydraulikzylinder 13, 23 zum Auslösen der Linearbewegung als Linearantrieb zum Verschieben der Seitenteile 1, 2 ausgebildet.

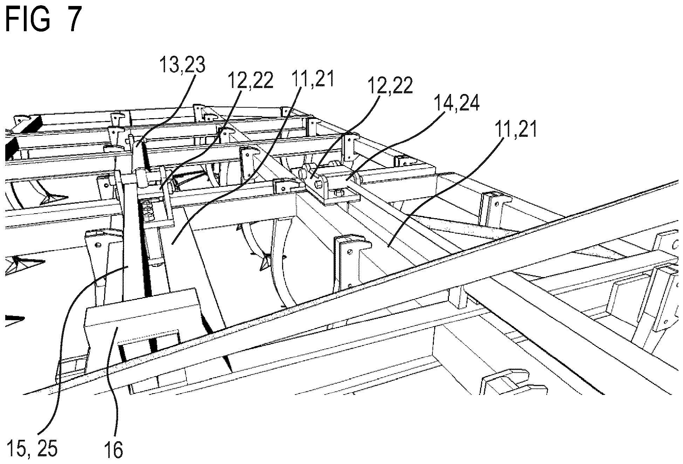

Die **Figur 7** zeigt eine vergrößerte Detailansicht des erfindungsgemäßen Bodenbearbeitungsgerätes gemäß Figur 1 in der breiten Arbeitsstellung. In dieser Ansicht sind vor allem die Gleitschienen 11, 21 und die Gleitschlitten 12, 22 zu sehen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen. XII.

### Bezugszeichenliste

- 100: Bodenbearbeitungsgerät (Grubber)

- 1: erstes Seitenteil
- 2: zweites Seitenteil
- 3: Mittelteil
- 4: Dreipunkt-Kupplung
- 5: Zinken

- 11, 21: Gleitschiene
- 12, 22: Gleitschlitten
- 13, 23: Hydraulikzylinder zum Schwenken der Seitenteile
- 14, 24: Hydraulikzylinder zum Verschieben der Seitenteile
- 15, 25: Drehmomentstütze
- 16: Abstützbügel für Drehmomentstütze
- L: Richtung der Linearbewegung
- S: Schwenkachse

## Patentansprüche

1. Bodenbearbeitungsgerät (100) zum Anhängen oder Anbauen an ein Zugfahrzeug, aufweisend:
1.1. eine Kupplungsvorrichtung (4), die das Bodenbearbeitungsgerät (100) mit dem Zugfahrzeug verbindet,
1.2. einen mehrteiligen Tragrahmen für eine Vielzahl von Bodenbearbeitungswerkzeugen (5), wobei der Tragrahmen ein Mittelteil (3) und mindestens zwei seitlich angeordnete, gegenüberliegende Seitenteile (1, 2) aufweist, und
1.3. eine Schwenkvorrichtung zum Schwenken der mindestens zwei Seitenteile (1, 2) jeweils um eine sich in Fahrtrichtung erstreckende Schwenkachse (S) zwischen einer breiten Arbeitsstellung und eine aufrechten Transportstellung, wobei
1.4. eine Verschiebevorrichtung vorliegt, mittels der die mindestens zwei Seitenteile (1, 2) in einer Linearbewegung quer zur Fahrtrichtung bewegt werden, **dadurch gekennzeichnet, dass**
1.5. je Seitenteil (1, 2) drei sich koaxial zur Schwenkachse (S) erstreckende Befestigungsachsen zum Befestigen des Seitenteils (1, 2) an dem Mittelteil (3) vorgesehen sind,
1.6. je Seitenteil (1,2) die drei Befestigungsachsen jeweils auf einem Gleitschlitten (12, 22) angeordnet sind, welche jeweils auf einer Gleitschiene (11, 21) quer zur Fahrtrichtung verschiebbar sind,
1.7. an mindestens einem Gleitschlitten (12, 22) ein Hydraulikzylinder (13 ,23) zum Schwenken des Seitenteils (1,2) vorgesehen ist, wobei der Hydraulikzylinder (13 ,23) einerseits an dem Gleitschlitten (12, 22) und andererseits an dem Seitenteil (1,2) angelenkt ist,
1.8. an dem mindestens einen Gleitschlitten (12, 22) eine Drehmomentstütze (15, 25) vorgesehen ist, welche das auf den Gleitschlitten (12, 22) wirkende Drehmoment beim Schwenken des Seitenteiles (1,2) zusätzlich in das Mittelteil (3) einleitet, wobei
1.9. ein Hydraulikzylinder (13 ,23) mit einer Drehmomentstütze (15, 25) auf einem mittleren Gleitschlitten (12, 22) vorgesehen ist.

2. Bodenbearbeitungsgerät (100) gemäß dem voranstehenden Patentanspruch 1, **dadurch gekennzeichnet, dass** die Schwenkachse (S) jeweils ortsfest ist.

3. Bodenbearbeitungsgerät (100) gemäß einem der voranstehenden Patentansprüche 1 bis 2, **dadurch gekennzeichnet, dass** die Schwenkachse (S) jeweils randseitig an dem Mittelteil (3) und den Seitenteilen (1, 2) angeordnet ist.

4. Bodenbearbeitungsgerät (100) gemäß einem der voranstehenden Patentansprüche 1 bis 3, **dadurch gekennzeichnet, dass** die Verschiebevorrichtung derart ausgebildet ist, dass die Linearbewegung in horizontaler Richtung (L) erfolgt.

5. Bodenbearbeitungsgerät (100) gemäß einem der voranstehenden Patentansprüche 1 bis 4, **dadurch gekennzeichnet, dass** zwei unmittelbar gegenüberliegende Drehmomentstützen (15, ,25) in Fahrtrichtung versetzt angeordnet sind.

6. Bodenbearbeitungsgerät (100) gemäß einem der voranstehenden Patentansprüche 1 bis 5, **dadurch gekennzeichnet, dass** die mindestens zwei Seitenteile (1, 2) über einen Linearantrieb miteinander gekoppelt sind, um die horizontale Linearbewegung auszuführen.

7. Bodenbearbeitungsgerät (100) gemäß einem der voranstehenden Patentansprüche 1 bis 6, **dadurch gekennzeichnet, dass** je Seitenteil (1, 2) mindestens ein Gleitschlitten (12, 22) über einen Linearantrieb (14, 24) mit dem Mittelteil (3) verbunden ist, um die horizontale Linearbewegung auszuführen.

8. Bodenbearbeitungsgerät (100) gemäß einem der voranstehenden Patentansprüche 1 bis 7, **dadurch gekennzeichnet, dass** das Mittelteil (3) quer zur Fahrtrichtung teleskopierbar ausgebildet ist, sodass in der Transportstellung die Breite des Mittelteils (3) quer zur Fahrtrichtung verringert werden kann.

9. Bodenbearbeitungsgerät (100) gemäß einem der voranstehenden Patentansprüche 1 bis 3, **dadurch gekennzeichnet, dass** die Verschiebevorrichtung derart ausgebildet ist, dass die Linearbewegung in vertikaler Richtung erfolgt.

10. Bodenbearbeitungsgerät (100) gemäß einem der voranstehenden Patentansprüche 1 bis 9, **dadurch gekennzeichnet, dass** eine Arretiervorrichtung vorgesehen ist, welche das Mittelteil (3) und die mindestens zwei Seitenteile (1, 2) in der Arbeits- oder Transportstellung fixiert.

11. Bodenbearbeitungsgerät (100) gemäß einem der voranstehenden Patentansprüche 1 bis 10, **dadurch gekennzeichnet, dass** an einer Seite jeweils zwei oder mehr Seitenteile (1, 2) vorgesehen sind, welche in Fahrtrichtung hintereinander an dem Mittelteil (3) angeordnet sind.

12. Bodenbearbeitungsgerät (100) gemäß einem der voranstehenden Patentansprüche 1 bis 11, **dadurch gekennzeichnet, dass** die mindestens zwei Seitenteile (1, 2) jeweils mindestens zwei Segmente aufweisen, welche zusammenklappbar, vorzugsweise um eine horizontale Achse klappbar, ausgebildet sind.

13. Bodenbearbeitungsgerät (100) gemäß einem der voranstehenden Patentansprüche 1 bis 12, **dadurch gekennzeichnet, dass** die Bodenbearbeitungswerkzeuge (5) auswechselbar ausgebildet sind.

14. Bodenbearbeitungsgerät (100) gemäß einem der voranstehenden Patentansprüche 1 bis 13, **dadurch gekennzeichnet, dass** mindestens ein höhenverstellbares Stützrad an dem Mittelteil (3) vorliegt.

15. Zugfahrzeug, insbesondere ein landwirtschaftliches Zugfahrzeug, mit einem Anbaugerät, **dadurch gekennzeichnet, dass** das Anbaugerät als Bodenbearbeitungsgerät (100) gemäß einem der voranstehenden Patentansprüche 1 bis 14 ausgeführt ist.

## Claims

1. Tillage implement (100) for hitching to or installing on a tractor, having:
1.1 a coupling device (4) which connects the tillage implement (100) to the tractor,
1.2 a multiple-part support frame for a multiplicity of tillage tools (5), wherein the support frame has a central part (3) and at least two laterally disposed, mutually opposite lateral parts (1, 2), and
1.3 a pivoting device for pivoting in each case between a wide operating position and an upright transporting position the at least two lateral parts (1, 2) about a pivot axis (S) that extends in the direction of travel, wherein
1.4 a displacement device by means of which the at least two lateral parts (1, 2) are moved in a linear movement transverse to the direction of travel is present,
**characterized in that**
1.5 three fastening axles which extend coaxially to the pivot axis (S) for fastening the lateral part (1, 2) to the central part (3) are provided for each lateral part (1, 2),
1.6 the three fastening axles for each lateral part (1, 2) are in each case disposed on a slider (12, 22), the latter being in each case displaceable transversely to the direction of travel on a slide rail (11, 21),
1.7 a hydraulic cylinder (13, 23) for pivoting the lateral part (1, 2) is provided on at least one slider (12, 22), wherein the hydraulic cylinder (13, 23) is articulated on the slider (12, 22), on the one hand, and on the lateral part (1, 2), on the other hand,
1.8 a torque bracket (15, 25) which additionally introduces the torque that acts on the slider (12, 22) during pivoting of the lateral part (1, 2) into the central part (3) is provided on the at least one slider (12, 22), wherein
1.9 a hydraulic cylinder (13, 23) having a torque bracket (15, 25) is provided on a central slider (12, 22) .

2. Tillage implement (100) according to preceding Patent Claim 1, **characterized in that** the pivot axis (S) is in each case stationary.

3. Tillage implement (100) according to one of preceding Patent Claims 1 to 2, **characterized in that** the pivot axis (S) is in each case disposed peripherally on the central part (3) and the lateral parts (1, 2).

4. Tillage implement (100) according to one of preceding Patent Claims 1 to 3, **characterized in that** the displacement device is configured in such a manner that the linear movement takes place in the horizontal direction (L).

5. Tillage implement (100) according to one of preceding Patent Claims 1 to 4, **characterized in that** two directly mutually opposite torque brackets (15, 25) are disposed to be offset in the direction of travel.

6. Tillage implement (100) according to one of preceding Patent Claims 1 to 5, **characterized in that** the at least two lateral parts (1, 2), for carrying out the horizontal linear movement, are coupled to one another by way of a linear drive.

7. Tillage implement (100) according to one of preceding Patent Claims 1 to 6, **characterized in that** at least one slider (12, 22) of each lateral part (1, 2), for carrying out the horizontal linear movement, is connected to the central part (3) by way of a linear drive (14, 24).

8. Tillage implement (100) according to one of preceding Patent Claims 1 to 7, **characterized in that** the central part (3) is configured to be telescopic transversely to the direction of travel, such that in the transporting position the width of the central part (3) transverse to the direction of travel can be reduced.

9. Tillage implement (100) according to one of preceding Patent Claims 1 to 3, **characterized in that** the displacement device is configured in such a manner that the linear movement takes place in the vertical direction.

10. Tillage implement (100) according to one of preceding Patent Claims 1 to 9, **characterized in that** a locking device which fixes the central part (3) and the at least two lateral parts (1, 2) in the operating position or transporting position is provided.

11. Tillage implement (100) according to one of preceding Patent Claims 1 to 10, **characterized in that** two or more lateral parts (1, 2), which in the direction of travel are disposed in succession on the central part (3), are provided on each side.

12. Tillage implement (100) according to one of preceding Patent Claims 1 to 11, **characterized in that** the at least two lateral parts (1, 2) each have at least two segments which are configured to be able to be folded up, preferably folded about a horizontal axis.

13. Tillage implement (100) according to one of preceding Patent Claims 1 to 12, **characterized in that** the tillage tools (5) are configured to be interchangeable.

14. Tillage implement (100) according to one of preceding Patent Claims 1 to 13, **characterized in that** at least one height-adjustable jockey wheel is present on the central part (3).

15. Tractor, in particular an agricultural tractor, having an add-on apparatus, **characterized in that** the add-on apparatus is embodied as a tillage implement (100) according to one of preceding Patent Claims 1 to 14.

## Revendications

1. Outil de travail du sol (100) destiné à être attelé à ou porté par un véhicule tracteur, présentant:
1.1. un dispositif de couplage (4) qui relie l'outil de travail du sol (100) au véhicule tracteur,
1.2. un cadre porteur en plusieurs parties pour une pluralité d'outils de travail du sol (5), le cadre porteur présentant une partie centrale (3) et au moins deux parties latérales opposées (1, 2), disposées latéralement, et
1.3. un dispositif de pivotement permettant de faire pivoter les au moins deux parties latérales (1, 2) respectivement autour d'un axe de pivotement (S), s'étendant dans le sens de la marche, entre une position de travail déployée et une position de transport redressée, dans lequel
1.4. un dispositif de décalage est présent, au moyen duquel les au moins deux parties latérales (1, 2) sont déplacées dans un mouvement linéaire transversalement au sens de la marche, **caractérisé en ce que**
1.5. par partie latérale (1, 2), trois axes de fixation s'étendant coaxialement par rapport à l'axe de pivotement (S) sont prévus pour fixer la partie latérale (1, 2) à la partie centrale (3),
1.6. par partie latérale (1, 2), les trois axes de fixation sont disposés respectivement sur un chariot (12, 22) qui peut être décalé respectivement sur une glissière (11, 21) transversalement au sens de la marche,
1.7. sur au moins un chariot (12, 22), un vérin hydraulique (13, 23) est prévu pour faire pivoter la partie latérale (1, 2), le vérin hydraulique (13, 23) étant articulé d'une part sur le chariot (12, 22) et d'autre part sur la partie latérale (1, 2),
1.8. sur ledit au moins un chariot (12, 22), un support de couple (15, 25) est prévu qui introduit le couple agissant sur le chariot (12, 22) lors du pivotement de la partie latérale (1, 2) en plus dans la partie centrale (3), dans lequel
1.9. un vérin hydraulique (13, 23) pourvu d'un support de couple (15, 25) est prévu sur un chariot central (12, 22).

2. Outil de travail du sol (100) selon la revendication précédente 1, **caractérisé en ce que** l'axe de pivotement (S) est respectivement fixe.

3. Outil de travail du sol (100) selon l'une quelconque des revendications précédentes 1 à 2, **caractérisé en ce que** l'axe de pivotement (S) est disposé respectivement en bordure sur la partie centrale (3) et les parties latérales (1, 2).

4. Outil de travail du sol (100) selon l'une quelconque des revendications précédentes 1 à 3, **caractérisé en ce que** le dispositif de décalage est réalisé de telle sorte que le mouvement linéaire est effectué dans la direction horizontale (L).

5. Outil de travail du sol (100) selon l'une quelconque des revendications précédentes 1 à 4, **caractérisé en ce que** deux supports de couple (15, 25) directement opposés sont disposés de manière décalée dans le sens de la marche.

6. Outil de travail du sol (100) selon l'une quelconque des revendications précédentes 1 à 5, **caractérisé en ce que** les au moins deux parties latérales (1, 2) sont couplées ensemble par l'intermédiaire d'un entraînement linéaire afin d'effectuer le mouvement linéaire.

7. Outil de travail du sol (100) selon l'une quelconque des revendications précédentes 1 à 6, **caractérisé en ce que** par partie latérale (1, 2), au moins un chariot (12, 22) est relié à la partie centrale (3) par l'intermédiaire d'un entraînement linéaire (14, 24) afin d'effectuer le mouvement linéaire horizontal.

8. Outil de travail du sol (100) selon l'une quelconque des revendications précédentes 1 à 7, **caractérisé en ce que** la partie centrale (3) est réalisée de manière télescopique transversalement au sens de la marche de sorte que dans la position de transport, la largeur de la partie centrale (3) peut être diminuée transversalement au sens de la marche.

9. Outil de travail du sol (100) selon l'une quelconque des revendications précédentes 1 à 3, **caractérisé en ce que** le dispositif de décalage est réalisé de telle sorte que le mouvement linéaire s'effectue dans la direction verticale.

10. Outil de travail du sol (100) selon l'une quelconque des revendications précédentes 1 à 9, **caractérisé en ce qu'**un dispositif d'arrêt est prévu qui fixe la partie centrale (3) et les au moins deux parties latérales (1, 2) dans la position de travail ou dans la position de transport.

11. Outil de travail du sol (100) selon l'une quelconque des revendications précédentes 1 à 10, **caractérisé en ce que** sur un côté, respectivement deux ou plusieurs parties latérales (1, 2) sont prévues qui sont disposées dans le sens de la marche les unes après les autres sur la partie centrale (3).

12. Outil de travail du sol (100) selon l'une quelconque des revendications précédentes 1 à 11, **caractérisé en ce que** les au moins deux parties latérales (1, 2) présentent respectivement au moins deux segments qui sont réalisés pour être repliables, de préférence de pliants autour d'un axe horizontal.

13. Outil de travail du sol (100) selon l'une quelconque des revendications précédentes 1 à 12, **caractérisé en ce que** les outils de travail du sol (5) sont réalisés pour être échangeables.

14. Outil de travail du sol (100) selon l'une quelconque des revendications précédentes 1 à 13, **caractérisé en ce qu'**au moins une roue de support réglable en hauteur est présente sur la partie centrale (3).

15. Véhicule tracteur, en particulier un véhicule tracteur agricole, comprenant un appareil porté, **caractérisé en ce que** l'appareil porté est réalisé sous la forme d'un outil de travail du sol (100) selon l'une quelconque des revendications précédentes 1 à 14.
